(19) **Europäisches Patentamt / European Patent Office / Office européen des brevets**

(11) **EP 1 936 155 B1**

(12) **FASCICULE DE BREVET EUROPEEN**

(45) Date de publication et mention
de la délivrance du brevet:
**07.04.2010 Bulletin 2010/14**

(51) Int Cl.:
*F02D 23/00* (2006.01)      *F02B 37/12* (2006.01)
*F02D 41/00* (2006.01)

(21) Numéro de dépôt: **07121685.7**

(22) Date de dépôt: **27.11.2007**

(54) **Méthode de détermination d'une pression en entrée d'une turbine de turbocompresseur équipant un moteur thermique**

Verfahren zur Feststellung des Abgasdrucks vor der Turbine eines Turboladers eines Verbrennungsmotors

Method for determining an intake pressure of a turbocompressor turbine equipping a heat engine

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.12.2006 FR 0655564**

(43) Date de publication de la demande:
**25.06.2008 Bulletin 2008/26**

(73) Titulaire: **PEUGEOT CITROËN AUTOMOBILES S.A.**
**78140 Vélizy Villacoublay (FR)**

(72) Inventeur: **Granel, M. Nicolas**
**92300 Levallois Perret (FR)**

(74) Mandataire: **Ménès, Catherine**
**Peugeot Citroën Automobiles SA**
**PI (LG081)**
**18, rue des Fauvelles**
**92250 La Garenne-Colombes (FR)**

(56) Documents cités:
**FR-A- 2 856 738      US-A1- 2003 101 723**

**Description**

L'invention concerne la détermination d'une pression en entrée d'une turbine d'un turbocompresseur équipant un moteur thermique.

La puissance d'un moteur à thermique dépend directement de la quantité d'air pouvant être admis dans ses chambres de combustion, laquelle est principalement conditionnée par la densité de cet air en entrée des chambres. Ainsi, la puissance d'un moteur de cylindrée donnée peut être accrue par suralimentation, c'est-à-dire en compressant l'air avant admission dans ses cylindres.

Le turbocompresseur qui est le dispositif de suralimentation le plus utilisé comprend une turbine située en sortie du moteur pour récupérer une partie de l'énergie contenue dans les gaz d'échappement, couplée à un compresseur situé en entrée du moteur pour augmenter la densité de l'air d'admission.

Le fonctionnement de la turbine nécessite un rapport de pression important entre l'entrée et la sortie de cette turbine. Il est donc indispensable d'accroître la pression en sortie du moteur, qui dépend ainsi de la caractéristique de débit de la turbine.

Cette augmentation de la pression en sortie de moteur se traduit par une augmentation des pertes dues au transfert des gaz, et par une augmentation de la quantité de gaz brulés pouvant rester dans les chambres de combustion.

L'intégration d'un turbocompresseur provoque d'autre part une augmentation de la température des gaz en début de combustion, ce qui se traduit par une augmentation de la température des gaz brûlés.

L'augmentation des pertes dues au transfert des gaz peut être compensée par les gains procurés par l'augmentation de la pression de l'air d'admission. Mais si la suralimentation est utilisée dans une large plage de fonctionnement, les pertes sont plus importantes que les gains dans une partie de la plage de fonctionnement.

Pour ce qui est des gaz brûlés restant dans les chambres de combustion, ils occupent une partie de l'espace disponible, ce qui réduit la quantité d'air frais pouvant être admis. De plus ces gaz peuvent dégrader la combustion du cycle suivant, particulièrement dans le cas d'un moteur à allumage commandé.

Ainsi, la pression en sortie du moteur, c'est à dire en entrée de turbine, a un effet fondamental sur le fonctionnement du moteur et sur son optimisation, et cette pression dépend de la caractéristique de débit de la turbine.

Cependant, les grandeurs fournies par les constructeurs, représentatives du comportement de la turbine dépendent de la pression à son entrée. En d'autres termes, les méthodes connues ne permettent pas de déterminer avec précision la pression en entrée de turbine à partir de données constructeur.

D'autre part, il s'avère complexe de mesurer directement cette pression du fait qu'elle varie fortement à une fréquence dépendant du régime moteur, et que l'intégration d'un capteur de pression approprié n'est pas possible dans la région située entre le moteur et la turbine.

Le but de l'invention est de proposer une méthode pour exprimer la pression en entrée de la turbine en fonction de grandeurs physiques se rapportant au moteur.

A cet effet, l'invention a pour objet une méthode de détermination, dans un moteur thermique suralimenté, d'une pression moyenne P3 en entrée d'une turbine d'un turbocompresseur de suralimentation de ce moteur, pour optimiser le fonctionnement de ce moteur, dans laquelle on évalue par mesure et/ou par calcul la température T3 du gaz entrant dans la turbine, la pression P4 du gaz sortant de la turbine, le débit massique Qgb du gaz traversant la turbine et la puissance Pwc développée par le compresseur du turbocompresseur, dans laquelle on détermine à partir de ces données une puissance adaptée Padapt et un débit adapté Qadapt avec les relations

$$Padapt = Pwc / (\sqrt{T3}.P4) \text{ et } Qadapt = Qgb.\sqrt{T3} / P4 \text{ ,}$$ dans laquelle on lit dans une table de données une valeur de taux de détente de la turbine associée au couple de valeurs formé par la puissance et le débit adaptés déterminés ci-dessus, et dans laquelle on multiplie le taux de détente par la pression en sortie de turbine P4 pour déterminer la pression en entrée de turbine P3.

Ainsi, il apparaît que le taux de détente de la turbine dépend uniquement de la puissance adaptée et du débit adapté. Il est donc possible, en exprimant le débit adapté et la puissance adaptée, comme indiqué ci-dessus, de déterminer la pression en entrée de turbine, à partir de données de fonctionnement extérieures à cette turbine.

L'invention concerne également une méthode telle que définie ci-dessus, dans laquelle la pression en sortie de turbine P4 est déterminée à partir de l'évaluation,du débit massique de gaz Qgb, d'une évaluation de la pression atmosphérique P0, d'une valeur de contre pression CPE à un débit de référence Qref, avec la relation

$$P4 = P0 + CPE * \left( \frac{Qgb}{Qref} \right)^2 .$$

L'invention concerne également une méthode telle que définie ci-dessus, dans laquelle la pression en sortie de turbine est déterminée par mesure directe avec un capteur de pression.

L'invention concerne également une méthode telle que définie ci-dessus, dans laquelle la puissance développée par le compresseur Pwc est déterminée à partir d'une évaluation d'une température T1 du gaz entrant dans le compresseur du turbocompresseur, d'une évaluation d'une température T2 du gaz sortant du compresseur, de la capacité calorifique de l'air Cpair, et d'une évaluation du débit de gaz Qair entrant dans le compresseur, avec la relation *Pwc = Qair * Cpair * (T2 - T1)*.

L'invention concerne également une méthode telle que définie ci-dessus, dans laquelle le débit de gaz Qair entrant dans le compresseur est déterminé à partir du débit de gaz Qgb sortant de la turbine et d'un facteur k représentatif du rapport entre le débit de gaz Qgb sortant de la turbine et le débit de gaz Qair entrant dans le compresseur, avec la relation Qgb = k.Qair.

L'invention concerne également une méthode telle que définie ci-dessus, dans laquelle la table de données donnant le taux de la compression Pit de la turbine en fonction de la puissance adaptée Padapt et du débit adapté Qadapt est établie en effectuant des essais de la turbine à différents points de fonctionnement.

L'invention sera maintenant décrite plus en détail, et en référence aux figures annexées.

La figure 1 est une représentation fonctionnelle d'un moteur équipé d'un turbocompresseur ;

La figure 2 est un graphe permettant de déterminer un taux de détente de turbine à partir de sa puissance adaptée et de son débit adapté.

L'idée à la base de l'invention est d'estimer, dans un moteur thermique équipé d'un turbocompresseur, la pression, notée P3, en sortie de ce moteur, c'est à dire en entrée de la turbine du turbocompresseur.

Cette estimation est effectuée à partir d'une représentation fonctionnelle du turbocompresseur, du besoin en suralimentation, de la pression en sortie de turbine et de l'énergie fournie par le moteur.

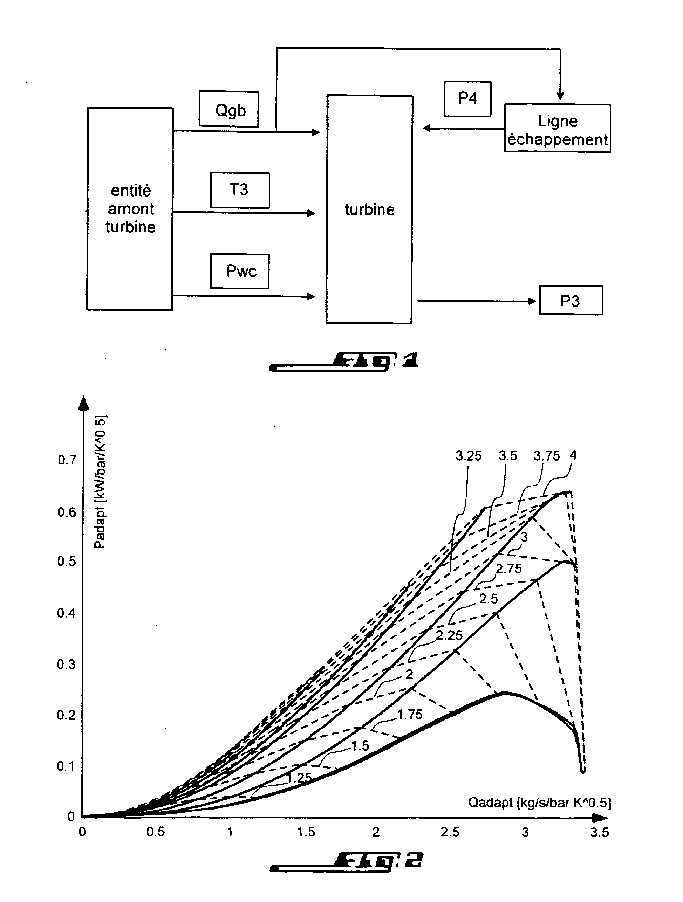

Le moteur est modélisé en trois entités fonctionnelles apparaissant sur le figure 1 : un bloc situé en amont de la turbine comprenant le moteur, le compresseur, les lignes d'air d'admission, le compresseur et les organes augmentant la densité de l'air, et les lignes d'air situées entre le moteur et l'entrée turbine ; la turbine en elle-même ; et la ligne d'échappement entre la turbine et la sortie

Le fonctionnement du moteur conditionne ou définit les variables suivantes : le débit d'air frais, noté Qair ; le débit de carburant noté Qcarb ; et la température en sortie du moteur, c'est à dire en entrée de la turbine, qui est notée T3.

Pour obtenir ce débit d'air, le compresseur génère un certain taux de compression, noté Pic, qui est le rapport entre la pression P1 en entrée du compresseur, et la pression P2 en sortie du compresseur.

Le compresseur a un rendement qui dépend de la température T1 à son entrée, du débit d'air du moteur et du taux de compression, ce qui définit la puissance Pwc nécessaire pour effectuer la suralimentation. Il résulte de ce fonctionnement la température T2 en sortie du compresseur.

La somme du débit d'air frais et du débit de carburant qui sont admis dans le moteur correspond au débit Qgb évacué par la ligne d'échappement. Compte tenu de la perméabilité de la ligne échappement qui est située en sortie de la turbine, il est possible d'estimer la pression P4 en sortie de turbine.

Cette représentation fonctionnelle proposée permet d'isoler l'inconnue du problème, à savoir la pression P3 en entrée de turbine.

Pour cela, on introduit les notations Qtred et Qcred qui correspondent respectivement au débit corrigé de la turbine et au débit corrigé du compresseur :

$$Qtred = \frac{Qgb * \sqrt{T3}}{P3} \text{ et } Qcred = \frac{Qair * \sqrt{T1}}{P1} \qquad [1]$$

On introduit également la grandeur Qadapt qui est homogène au débit réel moyennant la température T3 et la pression P4. Cette grandeur est intrinsèque à la turbine, alors que la température T3 est uniquement conditionnée par le fonctionnement du moteur, et que la pression P4 dépend seulement de la perte de charge de la ligne échappement :

$$Qadapt = Qred.PR = \frac{Qgb\sqrt{T3}}{P4} \qquad [2]$$

La pression P4 peut s'exprimer en fonction du débit d'échappement et de la perméabilité de la ligne, avec la relation suivante dans laquelle P0 désigne la pression atmosphérique, et CPE la contre pression à l'échappement pour un débit de référence noté Qref :

$$P4 = P0 + CPE * \left( \frac{Qgb}{Qref} \right)^2 \quad [3]$$

Cette pression P4 peut aussi être évaluée différemment ou encore être mesurée.

La puissance Pwc nécessaire au fonctionnement du compresseur, peut être déterminée à partir de la relation suivante, dans laquelle Cpair désigne la capacité calorifique de l'air :

$$Pwc = Qair * Cpair * (T2 - T1) \quad [4]$$

Ceci permet de déterminer la puissance réduite de la turbine, notée Pwtred, et la puissance réduite du compresseur, notée Pwcred :

$$Pwtred = \frac{Pwc}{\sqrt{T3} * P3} \quad \text{et} \quad Pwcred = \frac{Pwc}{\sqrt{T1} * P1} \quad [5]$$

La puissance adaptée est déterminée à partir de la relation suivante :

$$Padapt = Pwtred * PR = \frac{Pwc}{\sqrt{T3} * P4} \quad [6]$$

Cette grandeur est elle aussi homogène à la puissance réelle, moyennant la température T3 et la pression P4 qui dépendent respectivement du fonctionnement du moteur et de la perte de charge de la ligne d'échappement, tout en restant intrinsèque à la turbine.

Il s'ensuit que le fonctionnement de la turbine est entièrement caractérisé par deux faisceaux de courbes obtenus en balayant les régimes corrigés, et exprimant respectivement le débit adapté et la puissance adaptée, en fonction du taux de détente.

Les notations « adaptées » à la turbine sont à rapprocher, de par leur structure, aux notations « corrigées» au compresseur. En effet en utilisant un abus de langage, on peut considérer que le compresseur génère de la P2 et de la T2 et subit la P1 et la T1 imposées par la ligne admission, et de manière analogue, que la turbine génère de la P3 et de la T4 et subit la T3 et la P4 imposées par les cylindres et la ligne échappement.

Un choix judicieux de paramètres consiste à rendre implicites les variables P2, T2, P3, T4 qui sont conditionnées par le fonctionnement du turbocompresseur, et à rendre explicite les variables P1, T1, P4, T3 qui sont conditionnées par les lignes d'admission et d'échappement et les cylindres.

La correspondance entre les représentations fonctionnelles des lignes d'air, du compresseurs, des cylindres, et de la turbine se fait alors de manière naturelle puisque les sorties des uns sont les entrées des autres.

En fonctionnement stabilisé la puissance réelle et le régime réel sont égaux au compresseur et à la turbine : Pwc = Pwt, et Nc = Nt. De plus le débit réel de gaz traversant la turbine est égal au débit réel de gaz traversant le compresseur multiplié par un facteur k intégrant le carburant injecté, ainsi que d'autres phénomènes ayant une incidence sur ces débits.

$$Qgb = k * Qair$$

Les courbes caractéristiques du compresseur peuvent être tracées dans le référentiel adapté turbine, en utilisant les relations suivantes dans lesquelles N désigne le régime réel du turbocompresseur, et Tref une température de référence à laquelle ce régime est mesuré :

$$Padapt = \frac{Pwc}{\sqrt{T3} * P4} = \frac{Pwc}{\sqrt{T1} * P1} * \sqrt{\frac{T1}{T3}} * \frac{P1}{P4} = Pwcred * \sqrt{\frac{T1}{T3}} * \frac{P1}{P4} \quad [7]$$

$$Qadapt = \frac{Qgb * \sqrt{T3}}{P4} = \frac{k * Qair * \sqrt{T1}}{P1} * \sqrt{\frac{T3}{T1}} * \frac{P1}{P4} = Qcred * k * \sqrt{\frac{T3}{T1}} * \frac{P1}{P4} \qquad [8]$$

$$Ncorr = N * \sqrt{\frac{Tref}{T3}} = N * \sqrt{\frac{Tref}{T1}} * \sqrt{\frac{T1}{T3}} = Ncorrcomp * \sqrt{\frac{T1}{T3}} \qquad [9]$$

Ainsi à partir de données constructeur représentatives du comportement du compresseur, d'une hypothèse de P1/P4, d'une hypothèse de T1/T3, d'une hypothèse de rapport k entre les débits compresseur et turbine, nous pouvons obtenir l'intersection des caractéristiques turbine et compresseur pour chaque iso régime et réduire le faisceau turbine à deux courbes dans les repères Puissance adaptée - Débit adapté et Taux de détente - Débit adapté.

Ces courbes sont des quadratiques quasi-parfaites particulièrement robustes aux hypothèses de P1/P4, T1/T3 et k, et elles sont intrinsèques à l'association d'une turbine et d'un compresseur. Elles peuvent être estimées de manière approchée directement à partir de données constructeur si le compresseur qui a servi à la caractérisation correspond à celui de l'application étudiée.

On peut donc définir une série comme la donnée tabulée du taux de détente, du débit adapté et de la puissance adaptée pour une ouverture de turbine ou d'un système de suralimentation. Il est recommandé d'obtenir cette série pour une turbine et un compresseur à partir de la réduction fonctionnelle de la turbine et de données constructeur relatives au compresseur.

Un des intérêts principaux de la représentation par série est de pouvoir tracer sur un même graphique les iso taux de détente pour les différentes ouvertures d'un système de suralimentation. Dans le graphe de la figure 2, chaque série est représentée par une courbe en trait plein, et les iso-taux de détente sont représentées en pointillés.

Par association de séries, il est donc possible de simuler toute architecture de suralimentation.

Par conséquent partant d'un point de fonctionnement moteur, pour lequel on connaît le débit Qgb de gaz traversant la turbine, la puissance Pwc du compresseur, la température T3 du gaz en entrée de la turbine, et la pression P4 du gaz en sortie de la turbine, il est possible de traduire ces données en grandeur adaptée Qadapt et Padapt.

Ceci définit un taux de détente de la turbine, par exemple par interpolation des données figurant sur le graphe de la figure 2, et comme le taux de détente est défini par Pit = P3/P4, on peut exprimer la pression en entrée de turbine : P3 = Pit.P4.

Cette méthode permet d'anticiper sans mesure ou de vérifier la mesure de la pression en entrée de turbine à partir des données constructeur représentatives du comportement du compresseur et de la turbine. Elle permet de vérifier la concordance entre la mesure et le fonctionnement nominal de la machine de suralimentation afin d'anticiper un éventuel dysfonctionnement du moteur.

Cette pression peut être utilisée dans le cadre d'un diagnostic moteur, pour en optimiser le fonctionnement, où elle constitue une grandeur fonctionnelle. Elle peut également être exploitée par une unité de commande du moteur en vue d'optimiser continûment son fonctionnement.

Une implémentation de cette méthode peut consister à déterminer par mesure directe les températures T1, T2 et T3, et la pression P4 du gaz sortant de la turbine. La valeur du débit Qgb est ensuite déduite de ces valeurs en utilisant la relation [3], et la puissance du compresseur peut être déduite de la relation [4], en considérant que le débit d'air frais vérifie la relation *Qgb = k * Qair.*

## Revendications

**1.** Méthode de détermination, dans un moteur thermique suralimenté, d'une pression moyenne (P3) en entrée d'une turbine d'un turbocompresseur de suralimentation de ce moteur, pour optimiser le fonctionnement de ce moteur, dans laquelle on évalue par mesure et/ou par calcul la température (T3) du gaz entrant dans la turbine, la pression (P4) du gaz sortant de la turbine, le débit massique (Qgb) du gaz traversant la turbine et la puissance (Pwc) développée par le compresseur du turbocompresseur, déterminée à partir d'une évaluation d'une température (T1) du gaz entrant dans le compresseur du turbocompresseur, d'une évaluation d'une température (T2) du gaz sortant du compresseur, de la capacité calorifique de l'air (Cpair), et d'une évaluation du débit de gaz (Qair) entrant dans le compresseur, avec la relation *Pwc = Qair* Cpair* (*T2 - T*1) .et dans laquelle on détermine à partir de ces données une puissance adaptée (Padapt) et un débit adapté (Qadapt) avec les relations $Padapt = Pwc/(\sqrt{T3}.P4)$

et $Qadapt = Qgb.\sqrt{T3} / P4$, dans laquelle on lit dans une table de données une valeur de taux de détente (Pit) de la turbine associée au couple de valeurs formé par la puissance (Padapt) et le débit adapté (Qadapt) déterminés ci-dessus, et dans laquelle on multiplie le taux de détente (Pit) par la pression en sortie de turbine (P4) pour déterminer la pression en entrée de turbine (P3).

**2.** Méthode selon la revendication 1, dans laquelle la pression en sortie de turbine P4 est déterminée à partir de l'évaluation,du débit massique de gaz Qgb, d'une évaluation de la pression atmosphérique P0, d'une valeur de contre pression CPE à un débit de référence Qref, avec la relation $P4 = P0 + CPE * \left(\dfrac{Qgb}{Qref}\right)^2$.

**3.** Méthode selon la revendication 1 ou 2, dans laquelle la pression (P4) en sortie de turbine est déterminée par mesure directe avec un capteur de pression.

**4.** Méthode selon l'une des revendications précédentes, dans laquelle le débit de gaz (Qair) entrant dans le compresseur est déterminé à partir du débit de gaz (Qgb) sortant de la turbine et d'un facteur (k) représentatif du rapport entre le débit de gaz (Qgb) sortant de la turbine et le débit de gaz (Qair) entrant dans le compresseur, avec la relation Qgb = k.Qair.

**5.** Méthode selon l'une des revendications précédentes, dans laquelle la table de données donnant le taux de la compression (Pit) de la turbine en fonction de la puissance adaptée (Padapt) et du débit adapté (Qadapt) est établie en effectuant des essais de la turbine à différents points de fonctionnement.

**Claims**

**1.** Method for determining, in a supercharged thermal engine, a mean pressure (P3) on entry of a turbine of a supercharging turbocompressor of this engine, to optimize the functioning of this engine, in which one evaluates by measurement and/or by calculation the temperature (T3) of the gas entering in the turbine, the pressure (P4) of the gas exiting the turbine, the mass flow (Qgb) of the gas passing through the turbine and the power (Pwc) developed by the compressor of the turbocompressor, determined from an evaluation of a temperature (T1) of the gas entering in the compressor of the turbocompressor, from an evaluation of a temperature (T2) of the gas exiting the compressor, from the calorific capacity of the air (Cpair), and from an evaluation of the flow of gas (Qair) entering in the compressor, with the relation *Pwc = Qair \* Cpair \* (T2 - T1)* and in which one determines from these data an adapted power (Padapt) and an adapted flow (Qadapt) with the relations $Padapt = Pwc / (\sqrt{T3 .P4})$ and

$Qadapt = Qgb.\sqrt{T3 / P4}$, in which one reads in a table of data an expansion rate value (Pit) of the turbine associated with the couple of values formed by the adapted power (Padapt) and adapted flow (Qadapt) determined above, and in which the expansion rate (Pit) is multiplied by the turbine outlet pressure (P4) to determine the turbine entry pressure (P3).

**2.** Method according to Claim 1, in which the turbine outlet pressure P4 is determined from the evaluation of the mass flow of gas Qgb, from an evaluation of the atmospheric pressure P0, from a back pressure value CPE at a reference flow Qref, with the relation $P4 = P0 + CPE * \left(\dfrac{Qgb}{Qref}\right)^2$.

**3.** Method according to Claim 1 or 2, in which the turbine outlet pressure (P4) is determined by direct measurement with a pressure sensor.

**4.** Method according to one of the preceding claims, in which the flow of gas (Qair) entering in the compressor is determined from the flow of gas (Qgb) exiting from the turbine and from a factor (k) representative of the ratio between the flow of gas (Qgb) exiting from the turbine and the flow of gas (Qair) entering in the compressor, with the relation Qgb = k.Qair.

5. Method according to one of the preceding claims, in which the table of data giving the compression rate (Pit) of the turbine as a function of the adapted power (Padapt) and of the adapted flow (Qadapt) is established by carrying out tests of the turbine at different points of functioning.

**Patentansprüche**

1. Verfahren zum Bestimmen in einem Laderverbrennungsmotor eines mittleren Drucks (P3) am Eingang einer Turboverdichterturbine zum Aufladen dieses Motors, um den Betrieb dieses Motors zu optimieren, bei der man durch Messen und/oder Berechnen die Temperatur (T3) des Gases, das in die Turbine eintritt, den Druck (P4) des Gases, das aus der Turbine austritt, den Massedurchsatz (Qgb) des Gases, das die Turbine durchquert, und die Leistung (Pwc), die von dem Verdichter des Turboverdichters entwickelt wird, bestimmt ausgehend von einer Beurteilung einer Temperatur (T1) des Gases, das in den Kompressor des Turbokompressors eintritt, ausgehend von Beurteilung einer Temperatur (T2) des Gases, das aus dem Kompressor austritt, der Wärmekapazität der Luft (Cpair) und einer Beurteilung des Gasdurchsatzes (qair), der in den Kompressor eintritt, mit der Gleichung $Pwc = Qair * Cpair * (T2 - T1)$ beurteilt und bei dem man ausgehend von diesen Daten eine geeignete Leistung (Padapt) und einen geeigneten Durchsatz (Qadapt) mit den Gleichungen $Padapt = Pwc / (\sqrt{T3 \cdot P4})$ und

$Qadapt = Qgb \cdot \sqrt{T3 / P4}$ bestimmt, bei dem man in einer Datentabelle einen Entspannungsratenwert (Pit) der Turbine verbunden mit dem Wertepaar liest, das aus der Leistung (Padapt) und dem angepassten Durchsatz (Qadapt), die oben bestimmt sind, liest, und bei dem man die Entspannungsrate (Pit) mit dem Druck am Ausgang der Turbine (P4) multipliziert, um den Druck am Eingang der Turbine (P3) zu bestimmen.

2. Verfahren nach Anspruch 1, bei dem der Druck (P4) am Turbinenausgang ausgehend von der Beurteilung des Gasmassedurchsatzes Qbg, einer Beurteilung des Luftdrucks P0, einem Gegendruckwert CPE bei einem Bezugsdurchsatz Qref mit der folgenden Gleichung bestimmt wird: $P4 = P0 + CPE * \left( \dfrac{Qgb}{Qref} \right)^2$ .

3. Verfahren nach Anspruch 1 oder 2, bei dem der Druck (P4) am Turbinenausgang durch direktes Messen mit einem Drucksensor bestimmt wird.

4. Verfahren nach einem der vorhergehenden Ansprüche, bei dem der Gasdurchsatz (Qair), der in den Kompressor eintritt, ausgehend von dem Gasdurchsatz (Qgb), der aus der Turbine austritt, und von einem Faktor (k), der für das Verhältnis zwischen dem aus der Turbine austretenden Gasdurchsatz (Qbg) und dem in den Kompressor eintretenden Gasdurchsatz (Qair) repräsentativ ist, mit der Gleichung Qgb = k.Qair bestimmt wird.

5. Verfahren nach einem der vorhergehenden Ansprüche, bei dem die Datentabelle, die die Kompressionsrate (Pit) der Turbine in Abhängigkeit von der angepassten Leistung (Padapt) und dem angepassten Durchsatz (Qadapt) gibt, durch Ausführen von Tests der Turbine bei unterschiedlichen Betriebspunkten erstellt wird.

**Fig. 1**

**Fig. 2**